# EUROPEAN PATENT APPLICATION

(11) **EP 3 598 811 A1**
(43) Date of publication of application: **22.01.2020**
(21) Application number: 17901794.2
(22) Date of filing: 24.03.2017
(51) Int. Cl.: H04W 68/00, H04W 60/00, H04W 88/04

(54) **METHOD AND DEVICE FOR PAGING**

(71) Applicant: GUANGDONG OPPO MOBILE TELECOMMUNICATIONS CORP., LTD., Wusha, Chang'an Dongguan, Guangdong 523860 (CN)
(72) Inventor: LIU, Jianhua, Dongguan, Guangdong 523860 (CN); YANG, Ning, Dongguan, Guangdong 523860 (CN)
(74) Representative: Manitz Finsterwald Patent- und Rechtsanwaltspartnerschaft mbB
(86) International application number: PCT/CN2017/078138
(87) International publication number: WO 2018/170902

(57) **Abstract**

The present application provides a method and a device for paging. The method includes: receiving, by a first terminal device, first area information sent by a second terminal device, wherein the first area information is used by a network device to determine a paging area of the second terminal device according to the first area information; and sending, by the first terminal device, the first area information to the network device. In the method for paging according to the present application, the network device can determine the paging area of the second terminal device according to the first area information. Therefore, when the network device needs to page the second terminal device, the network device can initiate paging to the second terminal device only in the determined paging area, which can reduce the paging overhead.

## Description

### TECHNICAL FIELD

The present disclosure relates to the field of communication, and more particularly, to a method and an apparatus for paging.

### BACKGROUND

In a Long Term Evolution (LTE) system, when a network needs to send data to a terminal device in an idle state, the network needs to send a paging message to the terminal device in a Tracking Area (TA) of the terminal device, which causes a large paging overhead.

Moreover, when there is a terminal device that performs Device to Device (D2D) communication in the LTE system, if the remote terminal normally resides on the network, the network needs to send a paging message to the remote terminal in the entire TA area. If the remote terminal cannot reside on the network normally, the paging needs to be relayed through a relay terminal. At this time, the network needs to page the relay terminal in the entire area and relay through the relay terminal. This approach also results in a large paging overhead.

Thus, there is a need to provide a method for paging that can reduce the paging overhead.

### SUMMARY

The present application provides a method and an apparatus for paging that can reduce paging overhead.

In a first aspect, there is provided a method for paging, including: receiving, by a first terminal device, first area information sent by a second terminal device, wherein the first area information is used by a network device to determine a paging area of the second terminal device according to the first area information; and sending, by the first terminal device, the first area information to the network device.

In the method for paging according to the present application, the first terminal device forwards the first area information received from the second terminal device to the network device, so that the network device can determine the paging area of the second terminal device according to the first area information. Therefore, when the network device needs to page the second terminal device, the network device can initiate paging to the second terminal device only in the determined paging area, which can reduce the paging overhead.

Further, when the second terminal device is a power sensitive terminal device (for example, a wearable device), the first terminal device forwarding the first area information of the second terminal device can reduce power consumption of the second terminal device and extend battery duration.

Based on the first aspect, in an implementation of the first aspect, the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

Based on the first aspect, in an implementation of the first aspect, the first area information includes at least one of the following information: identifier information of the area, signal information related to the area, and resource information related to the area.

Based on the first aspect, in an implementation of the first aspect, the network device is an access network device; and sending, by the first terminal device, the first area information to the network device, includes:

sending, by the first terminal device, the first area information to a first target access network device.

Based on the first aspect, in an implementation of the first aspect, the first target access network device is a serving access network device of the first terminal device, or the first target access network device is an anchor access network device in a target area.

Based on the first aspect, in an implementation of the first aspect, sending, by the first terminal device, the first area information to the target access network device includes:
sending, by the first terminal device, a radio resource control RRC message to the first target access network device, wherein the RRC message includes the first area information; or
sending, by the first terminal device, a physical layer message to the first target access network device, wherein the physical layer message includes the first area information; or
sending, by the first terminal device, a layer two protocol data unit PDU to the first target access network device, wherein the layer two PDU includes the first area information.

Based on the first aspect, in an implementation of the first aspect, the network device is a core network device.

Based on the first aspect, in an implementation of the first aspect, sending, by the first terminal device, the first area information to the network device includes:
sending, by the first terminal device, a non-access stratum NAS message to the network device, wherein the NAS message includes the first area information.

Based on the first aspect, in an implementation of the first aspect, receiving, by a first terminal device, first area information sent by a second terminal device includes:
receiving, by the first terminal device, the first area message sent by the second terminal device through a direct message.

Based on the first aspect, in an implementation of the first aspect, the direct message is one of the following messages: a discovery message, a direct communication message, a layer two PDU message, and a physical layer message.

Based on the first aspect, in an implementation of the first aspect, the first terminal device is a relay device or a remote device, and the second terminal device is a relay device or a remote device.

Based on the first aspect, in an implementation of the first aspect, the first terminal device is in one of the following states: an idle state, a connected state, and an inactive state, and the second terminal device is in one of the following states: an idle state, a connected state, and an inactive state.

Based on the first aspect, in an implementation of the first aspect, the method further includes: when the first terminal device determines that the area information of the first terminal device changes, sending, by the first terminal device, second area information to the second terminal device.

In a second aspect, there is provided a method for paging, including: determining, by a second terminal device, first area information, wherein the first area information is used by a network device to determine a paging area of the second terminal device according to the first area information; and sending, by the second terminal device, the first area information to the network device.

In the method for paging according to the present application, the second terminal device sends the first area information to the network device, so that the network device can determine the paging area of the second terminal device according to the first area information. Therefore, when the network device needs to page the second terminal device, the network device can initiate paging to the second terminal device only in the determined paging area, which can reduce the paging overhead.

Based on the second aspect, in an implementation of the second aspect, sending, by the second terminal device, the first area information to the network device includes: sending, by the second terminal device, the first area information to a first terminal device, wherein the first terminal device is configured to forward the first area information to the network device.

Thereby, when the second terminal device is a power sensitive terminal device (for example, a wearable device), the first terminal device forwarding the first area information of the second terminal device can reduce power consumption of the second terminal device and extend battery duration.

Based on the second aspect, in an implementation of the second aspect, the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

Based on the second aspect, in an implementation of the second aspect, the first area information includes at least one of the following information: identifier information of the area, signal information related to the area, and resource information related to the area.

Based on the second aspect, in an implementation of the second aspect, sending, by the second terminal device, the first area information to a first terminal device includes: sending, by the second terminal device, the first area information to the first terminal device through a direct message.

Based on the second aspect, in an implementation of the second aspect, the direct message is one of the following messages: a discovery message, a direct communication message, a layer two PDU message, and a physical layer message.

Based on the second aspect, in an implementation of the second aspect, the first terminal device is a relay device or a remote device, and the second terminal device is a relay device or a remote device.

Based on the second aspect, in an implementation of the second aspect, the first terminal device is in one of the following states: an idle state, a connected state, and an inactive state, and the second terminal device is in one of the following states: an idle state, a connected state, and an inactive state.

Based on the second aspect, in an implementation of the second aspect, the method further includes: when the second terminal device determines that the first area information changes, sending, by the second terminal device, the changed area information to the first terminal device.

Based on the second aspect, in an implementation of the second aspect, the method further includes: receiving, by the second terminal device, second area information sent by the first terminal device.

In a third aspect, there is provided a method for paging, including: receiving, by a network device, first area information, wherein the first area information is used by the network device to determine a paging area of a second terminal device according to the first area information; and paging, by the network device, the second terminal device according to the first area information.

In the method for paging according to the present application, the network device pages the second terminal device according to the received first area information for determining the paging area of the second terminal device. Therefore, the network device can initiate paging to the second terminal device only in the determined paging area, which can reduce the paging overhead.

Based on the third aspect, in an implementation of the third aspect, receiving, by the network device, first area information includes: receiving, by the network device, the first area information sent by the second device; or receive, by the network device, the first area information sent by the first terminal device, wherein the first area information is sent by the second terminal device to the first terminal device.

Based on the third aspect, in an implementation of the third aspect, the network device is an access network device; and
receiving, by the network device, the first area information sent by the first terminal device includes:
receiving, by the network device, a radio resource control RRC message sent by the first terminal device, wherein the RRC message includes the first area information; or
receiving, by the network device, a physical layer message sent by the first terminal device, wherein the physical layer message includes the first area information; or
receiving, by the network device, a layer two protocol data unit PDU sent by the first terminal device, wherein the layer two PDU includes the first area information.

Based on the third aspect, in an implementation of the third aspect, the method further includes: sending, by the access network device, the first area information to a core network device.

Based on the third aspect, in an implementation of the third aspect, the access network device is a serving access network device of the first terminal device, or the access network device is an anchor access network device in a target area.

Based on the third aspect, in an implementation of the third aspect, the access network device is an anchor access network device in a target area; and paging, by the network device, the second terminal device according to the first area information includes: sending, by the anchor access network device, a first paging message to second target access network devices, and part or all of the second target access network devices are configured to send a second paging message to the second terminal device after receiving the first paging message, wherein the first paging message includes the first area information.

Based on the third aspect, in an implementation of the third aspect, the network device is a core network device; and
receiving, by the network device, the first area information sent by the first terminal device, includes:
receiving, by the network device, a non-access stratum NAS message sent by the first terminal device, wherein the NAS message includes the first area information.

Based on the third aspect, in an implementation of the third aspect, paging, by the network device, the second terminal device according to the first area information includes: sending, by the core network device, a first paging message to second target access network devices, and part or all of the second target access network devices are configured to send a second paging message to the second terminal device after receiving the first paging message, wherein the first paging message includes the first area information.

Based on the third aspect, in an implementation of the third aspect, the first area information is used to indicate at least one of the following areas: a beam area where the second terminal device is located, a cell where the second terminal device is located, and a base station where the second terminal device resides and a frequency point where the second terminal device resides, a paging area where the second terminal device is located, and a specific service area where the second terminal device is located.

Based on the third aspect, in an implementation of the third aspect, the first area information includes at least one of the following information: identification information of the area, signal information related to the area, and resource information related to the area.

In a fourth aspect, a terminal device is provided for performing the method of the above first aspect or any of the possible implementations of the first aspect. In particular, the terminal device includes functional modules for performing the method of the first aspect or any of the possible implementations of the first aspect described above.

In a fifth aspect, a terminal device is provided for performing the method of the above second aspect or any of the possible implementations of the second aspect. In particular, the terminal device includes functional modules for performing the method of the second aspect or any of the possible implementations of the second aspect described above.

In a sixth aspect, a network device is provided for performing the method of the above third aspect or any of the possible implementations of the third aspect. In particular, the network device includes functional modules for performing the method of the third aspect or any of the possible implementations of the third aspect described above.

In a seventh aspect, a terminal device is provided, including a processor, a memory, and a transceiver. The processor, the memory, and the transceiver communicate with each other through an internal connection path, transmit control and/or data signals, such that the terminal device performs the method of the above first aspect or any possible implementation of the first aspect.

In an eighth aspect, a terminal device is provided, including a processor, a memory, and a transceiver. The processor, the memory, and the transceiver communicate with each other through an internal connection path, transmit control and/or data signals, such that the terminal device performs the method of the above second aspect or any possible implementation of the second aspect.

In a ninth aspect, a network device is provided, including a processor, a memory, and a transceiver. The processor, the memory, and the transceiver communicate with each other through an internal connection path, transmit control and/or data signals, such that the network device performs the method of the above third aspect or any possible implementation of the third aspect.

In a tenth aspect, there is provided a computer readable medium for storing a computer program, the computer program including instructions for performing the above first aspect or any possible implementation of the first aspect.

In an eleventh aspect, there is provided a computer readable medium for storing a computer program, the computer program including instructions for performing the above second aspect or any possible implementation of the second aspect.

In a twelfth aspect, there is provided a computer readable medium for storing a computer program, the computer program including instructions for performing the above third aspect or any possible implementation of the third aspect.

### BRIEF DESCRIPTION OF THE DRAWINGS

FIG. 1 is a schematic diagram of an application scenario according to an embodiment of the present application;
FIG. 2 is a schematic flowchart of a method for paging according to an embodiment of the present application;
FIG. 3 is a schematic flowchart of a method for paging according to another embodiment of the present application;
FIG. 4 is a schematic flowchart of a method for paging according to still another embodiment of the present application;
FIG. 5 is a schematic block diagram of a terminal device according to an embodiment of the present application;
FIG. 6 is another schematic block diagram of a terminal device according to an embodiment of the present application;
FIG. 7 is a schematic block diagram of a terminal device according to another embodiment of the present application;
FIG. 8 is a schematic block diagram of a network device according to an embodiment of the present application;
FIG. 9 is a schematic block diagram of a terminal device according to still another embodiment of the present application; and
FIG. 10 is a schematic block diagram of a network device according to another embodiment of the present application.

### DETAILED DESCRIPTION

The technical solutions in the embodiments of the present application will be clearly and completely described in the following with reference to the accompanying drawings in the embodiments.

It should be understood that the technical solutions of the embodiments of the present application can be applied to various communication systems, such as a Global System of Mobile communication (GSM) system, a Code Division Multiple Access (CDMA) system, and a Wideband Code Division Multiple Access (WCDMA) system, General Packet Radio Service (GPRS), a Long Term Evolution (LTE) system, a LTE Frequency Division Duplex (FDD) System, LTE Time Division Duplex (TDD), a Universal Mobile Telecommunication System (UMTS) or a Worldwide Interoperability for Microwave Access (WiMAX) communication system, a 5G system, or a new Wireless (NR) system.

In the embodiment of the present application, the terminal device may include, but is not limited to, a mobile station (MS), a mobile terminal, a mobile telephone, user equipment (UE), a handset, and portable equipment, a vehicle, etc. The terminal device can communicate with one or more core networks via a Radio Access Network (RAN). For example, the terminal device can be a mobile phone (or known as a "cellular" telephone, a computer with wireless communication capabilities, etc. The terminal device can also be a portable, pocket-sized, handheld, computer-integrated or in-vehicle mobile device.

The network device involved in the embodiment of the present application is a device deployed in a radio access network to provide a wireless communication function for a terminal device. The network device may be a base station, and the base station may include various forms of macro base stations, micro base stations, relay stations, access points, and the like. In systems with different radio access technologies, the names of devices with base station functionality may vary. For example, in an LTE network, the base station may be referred to as an Evolved NodeB (eNB or eNodeB), and in a 3rd Generation (3G) network, the base station may be referred to as a Node B or the like. The network device can also be a core network device.

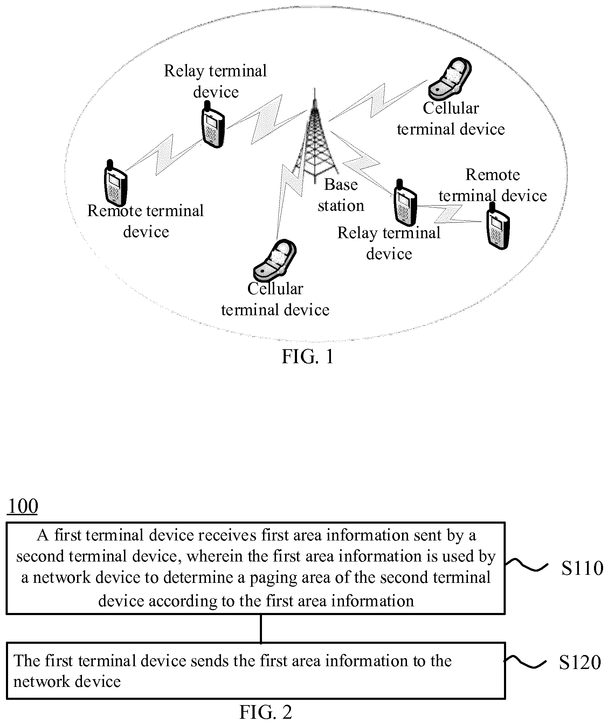

FIG. 1 is a schematic diagram of an application scenario according to an embodiment of the present application. The terminal device in the communication system shown in Fig. 1 can have two different communication modes. For example, communication between the cellular terminal devices is performed via the base station, communication between the relay terminal and the base station is in the cellular communication mode, and the relay terminal device and the remote terminal device directly communicate through the device to device (D2D) link. The D2D link direct communication also uses licensed band resources. The relay terminal device receives and forwards data in a half-duplex manner and performs mode conversion during reception and forwarding.

A method for paging according to an embodiment of the present application will be described in detail below in conjunction with the application scenario illustrated in FIG. 1.

FIG. 2 illustrates a method for paging according to an embodiment of the present application. As shown in FIG. 2, the method 100 includes the following steps.

In S110, a first terminal device receives first area information sent by a second terminal device, wherein the first area information is used by a network device to determine a paging area of the second terminal device according to the first area information.

In S120, the first terminal device sends the first area information to the network device.

In the method for paging according to the embodiment of the present application, the first terminal device forwards the first area information received from the second terminal device to the network device, so that the network device can determine the paging area of the second terminal device according to the first area information. Therefore, when the network device needs to page the second terminal device, the network device can initiate paging to the second terminal device only in the determined paging area, which can reduce the paging overhead.

Further, when the second terminal device is a power sensitive terminal device (for example, a wearable device), the first terminal device forwarding the first area information of the second terminal device can reduce power consumption of the second terminal device and extend battery duration.

It can be understood that the first terminal device can be a relay device or a remote device, and the second terminal device can be a relay device or a remote device. That is, in the method of the embodiment of the present application, a remote device or relay device can report the area information of the associated remote device or relay device to the network device, so that the network device can determine the paging area of the device according to the area information, which can in turn reduce paging overhead.

Moreover, the states of the first terminal device and the second terminal device are not limited in the embodiment of the present application. For example, the first terminal device can be in one of the following states: an idle state, a connected state, and an inactive state. Similarly, the second terminal device can be in one of the following states: an idle state, a connected state, and an inactive state.

Optionally, in S 11 0, the first area information is used to indicate at least one of the following areas: a beam area where the second terminal device is located, a cell where the second terminal device is located, and a base station where the second terminal device resides and a frequency point where the second terminal device resides, a paging area where the second terminal device is located, and a specific service area where the second terminal device is located.

For example, if there are multiple beams in the communication system, the first area information may indicate in the coverage area of which of the multiple beams the second terminal device is located. After receiving the first area information, when the network device needs to page the second terminal device, the network device only needs to page the second terminal device in the coverage area of the beam indicated by the first area information. Alternatively, the first area information can indicate a specific service area where the second terminal device is located, for example, indicating that the second terminal device is located in the broadcast service area. After the network device receives the first area information, when the network device needs to initiate a broadcast service to page the second terminal device, the network device only needs to page the second terminal device in the broadcast service area indicated by the first area information.

Specifically, in some embodiments, the first area information can be at least one of the following information: identification information of the area, signal information related to the area, and resource information related to the area. For example, the first area information can be an identifier of a beam area where the second terminal device is located, and the network device can determine, according to the first area information, a beam area where the second terminal device is located. Alternatively, the first area information can be resource information related to the area, and the resource information related to the area information can be information used to indicate the location of the time-frequency resource, and the network device knows in advance the correspondence between the location of the time-frequency resource and the area, such as the correspondence between the location of the time-frequency resource and the cell. When the network device receives the first area information, the network device can determine, according to the time-frequency resource location indicated by the first area information and the correspondence, the cell where the second terminal device is located. When the second terminal device needs to be paged, the second terminal device is paged within the determined cell range.

Optionally, in S110, the first terminal device receives the first area information sent by the second terminal device through a direct message.

Specifically, in some embodiments, the direct message can be at least one of the following messages: a discovery message, a direct communication message, a layer two PDU message (e.g., an adaptation layer PDU message or a medium access control (MAC) layer PDU message) and a physical layer message.

In the embodiment of the present application, optionally, the network device is an access network device. In this case, the first terminal device can make a Radio Resource Control (RRC) message sent to the network device to carry the first area information, or make a physical layer message sent to the network device to carry the first area information, or make a layer two protocol data unit (PDU) sent to the network device to carry the first area information.

Further, the access network device reports the received first area information to the core network device.

Optionally, in some embodiments, the foregoing access network device can be a serving access network device of the first terminal device, or the access network device is an anchor access network device in a target area. The target area here can be understood as a paging area of the terminal device determined by the network device according to the related art.

In addition, if the access network device is an anchor access network device, when the second terminal device needs to be paged, the anchor access network device can send a first paging message carrying the first area information to a second target access network device. The second target access network device here can be an access network device in an area where the second terminal device is located, as determined by the anchor access network device according to the first area information. The second target access network device can also be an access network device in the paging area of the second terminal device, as determined by the anchor access network device according to the related art. In this case, the second target access network device, which has received the paging message, determines whether the second terminal device is in the area served by the second target access network device itself according to the first area information in the paging message. If it is determined that the second terminal device is in the area served by the second target access network device itself, the second terminal device sends a second paging message to the second terminal device.

In the embodiment of the present application, optionally, the network device is a core network device. In this case, the first terminal device makes a non-access stratum (NAS) message sent to the core network device to carry the first area information.

In addition, if the network device is a core network device, when the second terminal device needs to be paged, the core network device can send a first paging message to a second target access network device, wherein the first paging message carries the first area information. The second target access network device here can be an access network device in an area where the second terminal device is located, as determined by the core network device according to the first area information. The second target access network device can also be an access network device in the paging area of the second terminal device, as determined by the core network device according to the related art. In this case, the second target access network device, which has received the paging message, determines whether the second terminal device is in the area served by the second target access network device itself according to the first area information in the paging message. If it is determined that the second terminal device is in the area served by the second target access network device itself, the second terminal device sends a second paging message to the second terminal device.

In all the above embodiments, optionally, when the first terminal device determines that the area information of the first terminal device itself changes, the first terminal device sends the changed area information to the second terminal device. Similarly, when the second terminal device determines that the area information of the second terminal device itself changes, the second terminal device sends the changed area information to the first terminal device.

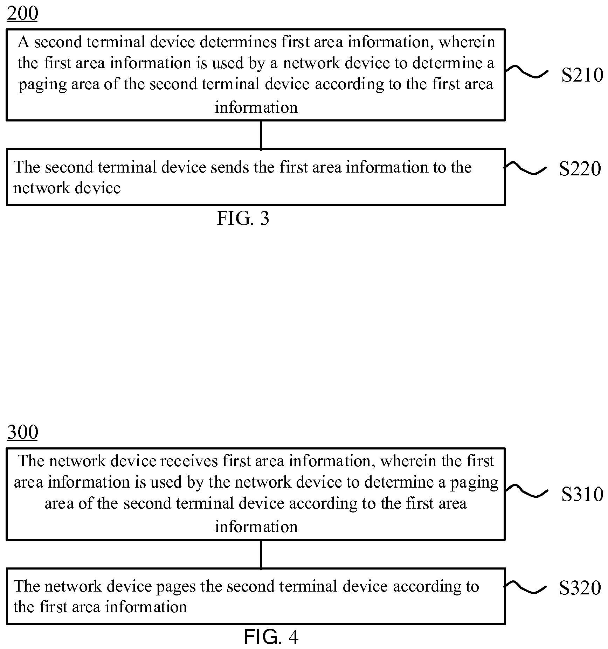

The method for paging according to the embodiment of the present application has been described in detail above with reference to FIG. 2 from the first terminal device side. The method for paging according to the embodiment of the present application will be described in detail below from the second terminal device side with reference to FIG. 3. It should be understood that the interaction among the second terminal device, the first terminal device and the network device described on the second terminal device side is the same as that described on the first terminal device side. To avoid repetition, the related description is omitted as appropriate.

FIG. 3 illustrates a method for paging according to another embodiment of the present application. As shown in FIG. 3, the method 200 includes the following steps.

In S210, a second terminal device determines first area information, wherein the first area information is used by a network device to determine a paging area of the second terminal device according to the first area information.

In S220, the second terminal device sends the first area information to the network device.

In the method for paging according to the embodiment of the present application, the second terminal device sends the first area information to the network device, so that the network device can determine the paging area of the second terminal device according to the first area information. Therefore, when the network device needs to page the second terminal device, the network device can initiate paging to the second terminal device only in the determined paging area, which can reduce the paging overhead.

In the embodiment of the present application, optionally, S220 includes:
the second terminal device sending the first area information to a first terminal device, wherein the first terminal device is configured to forward the first area information to the network device.

Therefore, when the second terminal device is a power sensitive terminal device (for example, a wearable device), the first terminal device forwarding the first area information of the second terminal device can reduce power consumption of the second terminal device and extend battery duration.

In the embodiment of the present application, optionally, the first area information is used to indicate at least one of the following areas: a beam area where the second terminal device is located, a cell where the second terminal device is located, and a base station where the second terminal device resides and a frequency point where the second terminal device resides, a paging area where the second terminal device is located, and a specific service area where the second terminal device is located.

In the embodiment of the present application, optionally, the first area information can be at least one of the following information: identification information of the area, signal information related to the area, and resource information related to the area.

In the embodiment of the present application, optionally, S220 includes:
the second terminal device sends the first area information to the first terminal device through a direct message.

In the embodiment of the present application, optionally, the direct message can be one of the following messages: a discovery message, a direct communication message, a layer two PDU message and a physical layer message.

In the embodiment of the present application, optionally, the first terminal device is a relay device or a remote device, and the second terminal device is a relay device or a remote device.

In the embodiment of the present application, optionally, the first terminal device can be in one of the following states: an idle state, a connected state, and an inactive state. Similarly, the second terminal device can be in one of the following states: an idle state, a connected state, and an inactive state.

In the embodiment of the present application, optionally, the method 200 further includes:

when the second terminal device determines that the first area information changes, the second terminal device sending the changed area information to the first terminal device.

In the embodiment of the present application, optionally, the method further includes: the second terminal device receiving a second area information sent by the first terminal device.

The method for paging according to the embodiment of the present application has been described in detail above with reference to FIG. 2 and FIG. 3 respectively from the first terminal device side and the second terminal device side. The method for paging according to the embodiment of the present application will be described in detail below from the network device side with reference to FIG. 4. It should be understood that the interaction among the network device, the first terminal device and the second terminal device described on the network device side is the same as that described on the first terminal device side. To avoid repetition, the related description is omitted as appropriate.

FIG. 4 illustrates a method for paging according to still another embodiment of the present application. As shown in FIG. 4, the method 300 includes the following steps.

In S310, the network device receives first area information, wherein the first area information is used by the network device to determine a paging area of the second terminal device according to the first area information.

In S320, the network device pages the second terminal device according to the first area information.

In the method for paging according to the embodiment of the present application, the network device pages the second terminal device according to the received first area information for determining the paging area of the second terminal device. Therefore, the network device can initiate paging to the second terminal device only in the determined paging area, which can reduce the paging overhead.

In the embodiment of the present application, optionally, S310 includes:
the network device receiving the first area information sent by the second device; or
the network device receiving the first area information sent by the first terminal device, wherein the first area information is sent by the second terminal device to the first terminal device.

In the embodiment of the present application, optionally, the network device is an access network device, wherein S310 includes:
the network device receiving a radio resource control RRC message sent by the first terminal device, wherein the RRC message includes the first area information; or
the network device receiving a physical layer message sent by the first terminal device, wherein the physical layer message includes the first area information; or
the network device receiving a layer two protocol data unit PDU sent by the first terminal device, wherein the layer two PDU includes the first area information.

In the embodiment of the present application, optionally, the method 300 further includes: the access network device sending the first area information to a core network device.

In the embodiment of the present application, optionally, the access network device is a serving access network device of the first terminal device, or the access network device is an anchor access network device in a target area.

In the embodiment of the present application, optionally, the access network device is an anchor access network device in the target area;
wherein S320 includes: the anchor access network device sending a first paging message to second target access network devices, and part or all of the second target access network devices are configured to send a second paging message to the second terminal device after receiving the first paging message, wherein the first paging message includes the first area information.

In the embodiment of the present application, optionally, the network device is a core network device, wherein S310 includes:
the network device receiving a non-access stratum NAS message sent by the first terminal device, wherein the NAS message includes the first area information.

In the embodiment of the present application, optionally, the S320 includes: the core network device sending a first paging message to second target access network devices, and part or all of the second target access network devices are configured to send a second paging message to the second terminal device after receiving the first paging message, wherein the first paging message includes the first area information.

In the embodiment of the present application, optionally, the first area information is used to indicate at least one of the following areas: a beam area where the second terminal device is located, a cell where the second terminal device is located, and a base station where the second terminal device resides and a frequency point where the second terminal device resides, a paging area where the second terminal device is located, and a specific service area where the second terminal device is located.

In the embodiment of the present application, optionally, the first area information includes at least one of the following information: identification information of the area, signal information related to the area, and resource information related to the area.

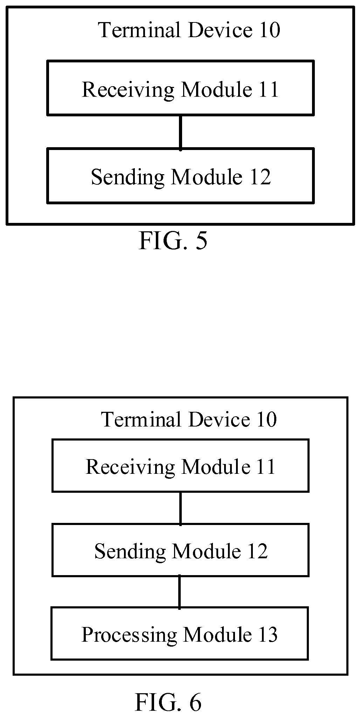

The method for paging according to the embodiment of the present application has been described in detail with reference to FIG. 1 to FIG. 4. The terminal device according to the embodiment of the present application is described in detail below with reference to FIG. 5. As shown in FIG. 5, the terminal device 10 includes:
a receiving module 11 configured to receive first area information sent by a second terminal device, wherein the first area information is used by a network device to determine a paging area of the second terminal device according to the first area information; and
a sending module 12 configured to send the first area information to the network device.

Therefore, the terminal device according to the embodiment of the present application forwards the first area information received from the second terminal device to the network device, so that the network device can determine the paging area of the second terminal device according to the first area information. Therefore, when the network device needs to page the second terminal device, the network device can initiate paging to the second terminal device only in the determined paging area, which can reduce the paging overhead.

In the embodiment of the present application, optionally, the first area information is used to indicate at least one of the following areas: a beam area where the second terminal device is located, a cell where the second terminal device is located, and a base station where the second terminal device resides and a frequency point where the second terminal device resides, a paging area where the second terminal device is located, and a specific service area where the second terminal device is located.

In the embodiment of the present application, optionally, the first area information includes at least one of the following information: identification information of the area, signal information related to the area, and resource information related to the area.

In the embodiment of the present application, optionally, the network device is an access network device; and
the sending module 12 is specifically configured to send the first area information to a first target access network device.

In the embodiment of the present application, optionally, the first target access network device is a serving access network device of the terminal device, or the first target access network device is an anchor access network device in a target area.

In the embodiment of the present application, optionally, the sending module 12 is specifically configured to:
send a radio resource control RRC message to the first target access network device, wherein the RRC message includes the first area information; or
send a physical layer message to the first target access network device, wherein the physical layer message includes the first area information; or
send a layer two protocol data unit PDU to the first target access network device, wherein the layer two PDU includes the first area information.

In the embodiment of the present application, optionally, the network device is a core network device.

In the embodiment of the present application, optionally, the sending module 12 is specifically configured to send a non-access stratum NAS message to the network device, wherein the NAS message includes the first area information.

In the embodiment of the present application, optionally, the receiving module 11 is specifically configured to receive the first area message sent by the second terminal device through a direct message.

In the embodiment of the present application, optionally, the direct message is one of the following messages: a discovery message, a direct communication message, a layer two PDU message, and a physical layer message.

In the embodiment of the present application, optionally, the terminal device is a relay device or a remote device, and the second terminal device is a relay device or a remote device.

In the embodiment of the present application, optionally, the terminal device is in one of the following states: an idle state, a connected state, and an inactive state. The second terminal device is in one of the following states: an idle state, a connected state, and an inactive state.

In the embodiment of the present application, optionally, as shown in FIG. 6, the terminal device further includes:
a processing module 13 configured to determine whether the area information of the terminal device changes.

The sending module 12 is further configured to when the processing module 13 determines that the area information of the terminal device changes, send second area information to the second terminal device.

The terminal device according to the embodiment of the present application can refer to the process of the method 100 corresponding to the embodiment of the present application, and the respective units/modules in the terminal device and the other operations and/or functions described above are respectively implemented to perform the corresponding processes in the method 100. For the sake of brevity, it will not be repeated here.

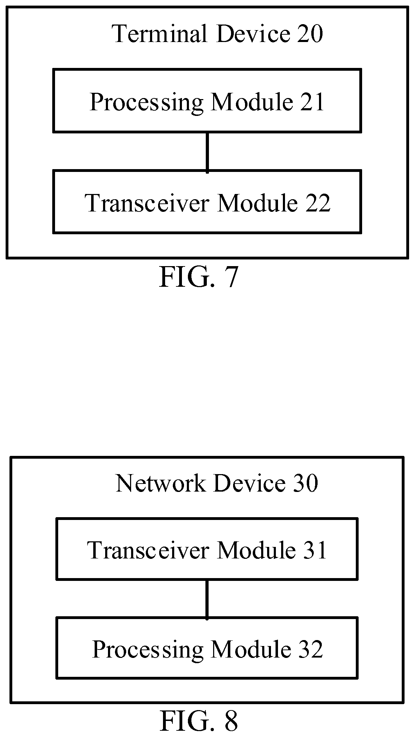

FIG. 7 shows a terminal device according to another embodiment of the present application. As shown in FIG. 7, the terminal device 20 includes:
a processing module 21 configured to determine first area information, wherein the first area information is used by a network device to determine a paging area of the terminal device according to the first area information; and
a transceiver module 22 configured to send the first area information to the network device.

Therefore, the terminal device according to the embodiment of the present application sends the first area information to the network device, so that the network device can determine the paging area of the terminal device according to the first area information. Therefore, when the network device needs to page the terminal device, the network device can initiate paging to the terminal device only in the determined paging area, which can reduce the paging overhead.

In the embodiment of the present application, optionally, the transceiver module 22 is specifically configured to:
send the first area information to a first terminal device, wherein the first terminal device is configured to forward the first area information to the network device.

In the embodiment of the present application, optionally, the first area information is used to indicate at least one of the following areas: a beam area where the terminal device is located, a cell where the terminal device is located, and a base station where the terminal device resides and a frequency point where the terminal device resides, a paging area where the terminal device is located, and a specific service area where the terminal device is located.

In the embodiment of the present application, optionally, the first area information includes at least one of the following information: identifier information of the area, signal information related to the area, and resource information related to the area.

In the embodiment of the present application, optionally, the transceiver module 22 is configured to send the first area information to the first terminal device through a direct message.

In the embodiment of the present application, optionally, the direct message is one of the following messages: a discovery message, a direct communication message, a layer two PDU message, and a physical layer message.

In the embodiment of the present application, optionally, the first terminal device is a relay device or a remote device, and the terminal device is a relay device or a remote device.

In the embodiment of the present application, optionally, the first terminal device is in one of the following states: an idle state, a connected state, and an inactive state. The second terminal device is in one of the following states: an idle state, a connected state, and an inactive state.

In the embodiment of the present application, optionally, the processing module 21 is further configured to determine whether the first area information changes.

The transceiver module 22 is further configured to when the processing module 21 determines that the first area information changes, send the changed area information to the first terminal device.

In the embodiment of the present application, optionally, the transceiver module 22 is further configured to receive the second area information sent by the first terminal device.

The terminal device according to the embodiment of the present application can refer to the process of the method 200 corresponding to the embodiment of the present application, and the respective units/modules in the terminal device and the other operations and/or functions described above are respectively implemented to perform the corresponding processes in the method 200. For the sake of brevity, it will not be repeated here.

FIG. 8 shows a network device according to an embodiment of the present application. As shown in FIG. 8, the network device 30 includes:
a transceiver module 31 configured to receive first area information, wherein the first area information is used by the network device to determine a paging area of the second terminal device according to the first area information; and
a processing module 32 configured to page the second terminal device according to the first area information.

Therefore, the network device according to the embodiment of the present application pages the second terminal device according to the received first area information for determining the paging area of the second terminal device. Therefore, the network device can initiate paging to the second terminal device only in the determined paging area, which can reduce the paging overhead.

In the embodiment of the present application, optionally, the transceiver module 31 is specifically configured to:
receive the first area information sent by the second device; or
receive the first area information sent by the first terminal device, wherein the first area information is sent by the second terminal device to the first terminal device.

In the embodiment of the present application, optionally, the network device is an access network device; and
the transceiver module 31 is specifically configured to receive a radio resource control RRC message sent by the first terminal device, wherein the RRC message includes the first area information; or
receive a physical layer message sent by the first terminal device, wherein the physical layer message includes the first area information; or
receive a layer two protocol data unit PDU sent by the first terminal device, wherein the layer two PDU includes the first area information.

In the embodiment of the present application, optionally, the transceiver module 31 is further configured to send the first area information to a core network device.

In the embodiment of the present application, optionally, the access network device is a serving access network device of the first terminal device, or the access network device is an anchor access network device in a target area.

In the embodiment of the present application, optionally, the access network device is an anchor access network device in the target area; and
the transceiver module 31 is further configured to send a first paging message to second target access network devices, and part or all of the second target access network devices are configured to send a second paging message to the second terminal device after receiving the first paging message, wherein the first paging message includes the first area information.

In the embodiment of the present application, optionally, the network device is a core network device; and
the transceiver module 31 is specifically configured to receive a non-access stratum NAS message sent by the first terminal device, wherein the NAS message includes the first area information.

In the embodiment of the present application, optionally, the transceiver module 31 is specifically configured to send a first paging message to second target access network devices, and part or all of the second target access network devices are configured to send a second paging message to the second terminal device after receiving the first paging message, wherein the first paging message includes the first area information.

In the embodiment of the present application, optionally, the first area information is used to indicate at least one of the following areas: a beam area where the second terminal device is located, a cell where the second terminal device is located, and a base station where the second terminal device resides and a frequency point where the second terminal device resides, a paging area where the second terminal device is located, and a specific service area where the second terminal device is located.

In the embodiment of the present application, optionally, the first area information includes at least one of the following information: identification information of the area, signal information related to the area, and resource information related to the area.

The network device according to the embodiment of the present application can refer to the process of the method 300 corresponding to the embodiment of the present application, and the respective units/modules in the network device and the foregoing other operations and/or functions respectively implement the corresponding processes in the method 300. For the sake of brevity, it will not be repeated here.

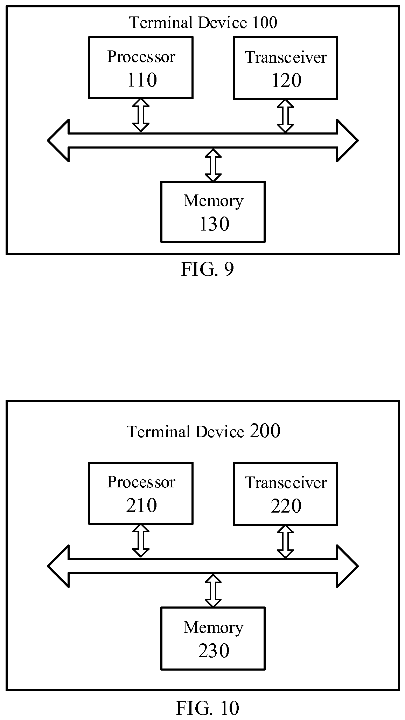

FIG. 9 shows a terminal device according to still another embodiment of the present application. As shown in FIG. 9, the terminal device 100 includes a processor 110 and a transceiver 120. The processor 110 is connected to the transceiver 120. Optionally, the network device 100 further includes a memory 130. The memory 130 is connected to the processor 110. The processor 110, the memory 130, and the transceiver 120 can communicate with each other through an internal connection path. The transceiver 120 is configured to receive first area information sent by the second terminal device, wherein the first area information is used by a network device to determine a paging area of the second terminal device according to the first area information. The transceiver 120 is further configured to send the first area information to the network device.

Therefore, the terminal device according to the embodiment of the present application forwards the first area information received from the second terminal device to the network device, so that the network device can determine the paging area of the second terminal device according to the first area information. Therefore, when the network device needs to page the second terminal device, the network device can initiate paging to the second terminal device only in the determined paging area, which can reduce the paging overhead.

The terminal device 100 according to the embodiment of the present application can refer to the terminal device 10 corresponding to the embodiment of the present application, and each unit/module in the terminal device and the other operations and/or functions respectively implement the corresponding processes in the method 100. For the sake of brevity, it will not be repeated here.

Alternatively, the processor 110 is configured to determine first area information, wherein the first area information is used by a network device to determine a paging area of the terminal device according to the first area information; and the transceiver 120 is configured to send the first area information to the network device.

Therefore, the terminal device according to the embodiment of the present application sends the first area information to the network device, so that the network device can determine the paging area of the terminal device according to the first area information. Therefore, when the network device needs to page the terminal device, the network device can initiate paging to the terminal device only in the determined paging area, which can reduce the paging overhead.

The terminal device 100 according to the embodiment of the present application can refer to the terminal device 20 corresponding to the embodiment of the present application, and the respective units/modules in the terminal device and the other operations and/or functions respectively implement the corresponding processes in the method 200, For the sake of brevity, it will not be repeated here.

FIG. 10 is a schematic block diagram of a network device according to another embodiment of the present application. As shown in FIG. 10, the network device 200 includes: a processor 210 and a transceiver 220. The processor 210 is connected to the transceiver 220. Optionally, the terminal device 200 further includes a memory 230, and the memory 230 is connected to the processor 210. The processor 210, the memory 230, and the transceiver 220 can communicate with each other through an internal connection path. The transceiver 220 is configured to receive first area information, wherein the first area information is used by the network device to determine a paging area of the second terminal device according to the first area information; and the processor 210 is configured to page the second terminal device according to the first area information.

Therefore, the network device according to the embodiment of the present application pages the second terminal device according to the received first area information for determining the paging area of the second terminal device. Therefore, the network device can initiate paging to the second terminal device only in the determined paging area, which can reduce the paging overhead.

The network device 200 according to the embodiment of the present application can refer to the network device 30 corresponding to the embodiment of the present application, and the respective units/modules in the network device and the other operations and/or functions respectively implement the corresponding processes in the method 300. For the sake of brevity, it will not be repeated here.

It can be understood that the processor in the embodiment of the present application can be an integrated circuit chip with signal processing capability. The processor can be a general-purpose processor, a digital signal processor (DSP), an application specific integrated circuit (ASIC), a Field Programmable Gate Array (FPGA), or other programmable logic devices, discrete gates or transistor logic devices, discrete hardware components. The methods, steps, and logical block diagrams disclosed in the embodiments of the present application can be implemented or executed. The general purpose processor can be a microprocessor or the processor or any conventional processor or the like.

The memory in the embodiments of the present application can be a volatile memory or a non-volatile memory, or can include both volatile and non-volatile memory. The non-volatile memory can be a read-only memory (ROM), a programmable read only memory (PROM), an erasable programmable read only memory (Erasable PROM, EPROM), or an electrically erasable programmable read only memory (EEPROM) or a flash memory. The volatile memory can be a Random Access Memory (RAM) that acts as an external cache. By way of example and not limitation, many forms of RAM are available, such as a static random access memory (SRAM), a dynamic random access memory (DRAM), a synchronous dynamic random access memory (Synchronous DRAM, SDRAM), a Double Data Rate SDRAM (DDR SDRAM), an Enhanced Synchronous Dynamic Random Access Memory (ESDRAM), a Synchronous Connection Dynamic Random Access Memory (Synch link DRAM, SLDRAM) and a direct memory bus random access memory (DR RAM). It should be noted that the memories of the systems and methods described herein are intended to include, without being limited to, these and any other suitable types of memories.

Those of ordinary skill in the art will appreciate that the elements and algorithm steps of the various examples described in connection with the embodiments disclosed herein can be implemented in electronic hardware or a combination of computer software and electronic hardware. Whether these functions are performed in hardware or software depends on the specific application and design constraints of the solution. A person skilled in the art can use different methods to implement the described functions for each particular application, but such implementation should not be considered to be beyond the scope of the present application.

A person skilled in the art can clearly understand that for the convenience and brevity of the description, the specific working process of the system, the devices and the units described above can refer to the corresponding processes in the foregoing method embodiments, and details are not described herein again.

In the several embodiments provided by the present application, it should be understood that the disclosed systems, devices, and methods can be implemented in other manners. For example, the device embodiments described above are merely illustrative. For example, the division of the unit is only a logical function division. In actual implementation, there can be another division manner, for example, multiple units or components can be combined or can be integrated into another system, or some features can be ignored or skipped. In addition, the mutual coupling or direct coupling or communication connection shown or discussed can be an indirect coupling or communication connection through some interfaces, devices or units, and can be in an electrical, mechanical or other form.

The units described as separate components can or cannot be physically separated, and the components displayed as units can or cannot be physical units, that is, can be located in one place, or can be distributed to multiple network units. Some or all of the units can be selected according to actual needs to achieve the objective of the solution of the embodiment.

In addition, each functional unit in each embodiment of the present application can be integrated into one processing unit, or each unit can exist physically separately, or two or more units can be integrated into one unit.

The functions can be stored in a computer readable storage medium if implemented in the form of a software functional unit and sold or used as a standalone product. Based on such understanding, the technical solution of the present application, in its essence or with the part contributing to the prior art, or a part of the technical solution, can be embodied in the form of a software product, which is stored in a storage medium, including instructions used to cause a computer device (which can be a personal computer, a server, or a network device, etc.) to perform all or part of the steps of the methods described in various embodiments of the present application. The storage medium includes: a U disk, a mobile hard disk, a read-only memory (ROM), a random access memory (RAM), a magnetic disk, or an optical disk, and various media that can store program codes.

The foregoing is only a specific embodiment of the present application, but the scope of protection of the present application is not limited thereto, and any person skilled in the art can easily think of modifications or substitutions within the technical scope disclosed in the present application. Such modifications or substitutions should be covered by the scope of protection of this application. Therefore, the scope of protection of the present application should be subject to the protection scope of the claims.

## Claims

1. A method for paging, comprising:
receiving, by a first terminal device, first area information sent by a second terminal device, wherein the first area information is used by a network device to determine a paging area of the second terminal device according to the first area information; and
sending, by the first terminal device, the first area information to the network device.

2. The method according to claim 1, wherein the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

3. The method according to claim 2, wherein the first area information comprises at least one of the following information: identifier information of the area, signal information related to the area, and resource information related to the area.

4. The method according to any one of claims 1 to 3, wherein the network device is an access network device; and
sending, by the first terminal device, the first area information to the network device, comprises:
sending, by the first terminal device, the first area information to a first target access network device.

5. The method according to claim 4, wherein the first target access network device is a serving access network device of the first terminal device, or the first target access network device is an anchor access network device in a target area.

6. The method according to claim 4 or 5, wherein sending, by the first terminal device, the first area information to the target access network device comprises:
sending, by the first terminal device, a radio resource control RRC message to the first target access network device, wherein the RRC message comprises the first area information; or
sending, by the first terminal device, a physical layer message to the first target access network device, wherein the physical layer message comprises the first area information; or
sending, by the first terminal device, a layer two protocol data unit PDU to the first target access network device, wherein the layer two PDU comprises the first area information.

7. The method according to any one of claims 1 to 3, wherein the network device is a core network device.

8. The method according to claim 7, wherein sending, by the first terminal device, the first area information to the network device comprises:
sending, by the first terminal device, a non-access stratum NAS message to the network device, wherein the NAS message comprises the first area information.

9. The method according to any one of claims 1 to 8, wherein receiving, by a first terminal device, first area information sent by a second terminal device comprises:
receiving, by the first terminal device, the first area message sent by the second terminal device through a direct message.

10. The method according to claim 9, wherein the direct message is one of the following messages: a discovery message, a direct communication message, a layer two PDU message, and a physical layer message.

11. The method according to any one of claims 1 to 10, wherein the first terminal device is a relay device or a remote device, and the second terminal device is a relay device or a remote device.

12. The method according to any one of claims 1 to 11, wherein the first terminal device is in one of the following states: an idle state, a connected state, and an inactive state, and the second terminal device is in one of the following states: an idle state, a connected state, and an inactive state.

13. The method according to any one of claims 1 to 12, further comprising:
when the first terminal device determines that the area information of the first terminal device changes, sending, by the first terminal device, second area information to the second terminal device.

14. A method for paging, comprising:
determining, by a second terminal device, first area information, wherein the first area information is used by a network device to determine a paging area of the second terminal device according to the first area information; and
sending, by the second terminal device, the first area information to the network device.

15. The method according to claim 14, wherein sending, by the second terminal device, the first area information to the network device comprises:
sending, by the second terminal device, the first area information to a first terminal device, wherein the first terminal device is configured to forward the first area information to the network device.

16. The method according to claim 15, wherein the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

17. The method according to claim 16, wherein the first area information comprises at least one of the following information: identifier information of the area, signal information related to the area, and resource information related to the area.

18. The method according to any one of claims 15 to 17, wherein sending, by the second terminal device, the first area information to a first terminal device comprises:
sending, by the second terminal device, the first area information to the first terminal device through a direct message.

19. The method according to claim 18, wherein the direct message is one of the following messages: a discovery message, a direct communication message, a layer two PDU message, and a physical layer message.

20. The method according to any one of claims 14 to 19, wherein the first terminal device is a relay device or a remote device, and the second terminal device is a relay device or a remote device.

21. The method according to any one of claims 14 to 20, wherein the first terminal device is in one of the following states: an idle state, a connected state, and an inactive state, and the second terminal device is in one of the following states: an idle state, a connected state, and an inactive state.

22. The method according to any one of claims 14 to 21, further comprising:
when the second terminal device determines that the first area information changes, sending, by the second terminal device, the changed area information to the first terminal device.

23. The method according to any one of claims 14 to 22, further comprising:
receiving, by the second terminal device, second area information sent by the first terminal device.

24. A method for paging, comprising:
receiving, by a network device, first area information, wherein the first area information is used by the network device to determine a paging area of a second terminal device according to the first area information; and
paging, by the network device, the second terminal device according to the first area information.

25. The method according to claim 24, wherein receiving, by the network device, first area information comprises:
receiving, by the network device, the first area information sent by the second device; or
receive, by the network device, the first area information sent by the first terminal device, wherein the first area information is sent by the second terminal device to the first terminal device.

26. The method according to claim 25, wherein the network device is an access network device; and
receiving, by the network device, the first area information sent by the first terminal device comprises:
receiving, by the network device, a radio resource control RRC message sent by the first terminal device, wherein the RRC message comprises the first area information; or
receiving, by the network device, a physical layer message sent by the first terminal device, wherein the physical layer message comprises the first area information; or
receiving, by the network device, a layer two protocol data unit PDU sent by the first terminal device, wherein the layer two PDU comprises the first area information.

27. The method according to claim 26, further comprising:
sending, by the access network device, the first area information to a core network device.

28. The method according to claim 26 or 27, wherein the access network device is a serving access network device of the first terminal device, or the access network device is an anchor access network device in a target area.

29. The method according to claim 28, wherein the access network device is an anchor access network device in a target area; and
paging, by the network device, the second terminal device according to the first area information comprises:
sending, by the anchor access network device, a first paging message to second target access network devices, and part or all of the second target access network devices are configured to send a second paging message to the second terminal device after receiving the first paging message, wherein the first paging message comprises the first area information.

30. The method according to claim 25, wherein the network device is a core network device; and
receiving, by the network device, the first area information sent by the first terminal device, comprises:
receiving, by the network device, a non-access stratum NAS message sent by the first terminal device, wherein the NAS message comprises the first area information.

31. The method according to claim 30, wherein paging, by the network device, the second terminal device according to the first area information comprises:
sending, by the core network device, a first paging message to second target access network devices, and part or all of the second target access network devices are configured to send a second paging message to the second terminal device after receiving the first paging message, wherein the first paging message comprises the first area information.

32. The method according to any one of claims 24 to 31, wherein the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

33. The method according to claim 32, wherein the first area information comprises at least one of the following information: identification information of the area, signal information related to the area, and resource information related to the area.

34. A terminal device, comprising:
a receiving module configured to receive first area information sent by a second terminal device, wherein the first area information is used by a network device to determine a paging area of the second terminal device according to the first area information; and
a sending module configured to send the first area information to the network device.

35. The terminal device according to claim 34, wherein the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

36. The terminal device according to claim 35, wherein the first area information comprises at least one of the following information: identification information of the area, signal information related to the area, and resource information related to the area.

37. The terminal device according to any one of claims 34 to 36, wherein the network device is an access network device; and
the sending module is specifically configured to:
send the first area information to a first target access network device.

38. The terminal device according to claim 37, wherein the first target access network device is a serving access network device of the terminal device, or the first target access network device is an anchor access network device in a target area.

39. The terminal device according to claim 37 or 38, wherein the sending module is specifically configured to
send a radio resource control RRC message to the first target access network device, wherein the RRC message comprises the first area information; or
send a physical layer message to the first target access network device, wherein the physical layer message comprises the first area information; or
send a layer two protocol data unit PDU to the first target access network device, wherein the layer two PDU comprises the first area information.

40. The terminal device according to any one of claims 34 to 38, wherein the network device is a core network device.

41. The terminal device according to claim 40, wherein the sending module is specifically configured to:
send a non-access stratum NAS message to the network device, wherein the NAS message comprises the first area information.

42. The terminal device according to any one of claims 34 to 41, wherein the receiving module is specifically configured to:
receive the first area message sent by the second terminal device through a direct message.

43. The terminal device according to claim 42, wherein the direct message is one of the following messages: a discovery message, a direct communication message, a layer two PDU message, and a physical layer message.

44. The terminal device according to any one of claims 34 to 43, wherein the terminal device is a relay device or a remote device, and the second terminal device is a relay device or a remote device.

45. The terminal device according to any one of claims 34 to 44, wherein the terminal device is in one of the following states: an idle state, a connected state, and an inactive state, and the second terminal device is in one of the following states: an idle state, a connected state, and an inactive state.

46. The terminal device according to any one of claims 34 to 45, further comprising:
a processing module configured to determine whether the area information of the terminal device changes;
wherein the sending module is further configured to:
when the processing module determines that the area information of the terminal device changes, send second area information to the second terminal device.

47. A terminal device, comprising:
a processing module configured to determine first area information, wherein the first area information is used by a network device to determine a paging area of the terminal device according to the first area information; and
a transceiver module configured to send the first area information to the network device.

48. The terminal device according to claim 47, wherein the transceiver module is specifically configured to:
send the first area information to a first terminal device, wherein the first terminal device is configured to forward the first area information to the network device.

49. The terminal device according to claim 48, wherein the first area information is used to indicate at least one of the following areas: a beam area where the second terminal device is located, a cell where second the terminal device is located, a base station where the second terminal device resides, a frequency point where the second terminal device resides, a paging area where the second terminal device is located, and a specific service area where the second terminal device is located.

50. The terminal device according to claim 49, wherein the first area information comprises at least one of the following information: identifier information of the area, signal information related to the area, and resource information related to the area.

51. The terminal device according to any one of claims 48 to 50, wherein the transceiver module is configured to:
send the first area information to the first terminal device through a direct message.

52. The terminal device according to claim 51, wherein the direct message is one of the following messages: a discovery message, a direct communication message, a layer two PDU message, and a physical layer message.

53. The terminal device according to any one of claims 47 to 52, wherein the first terminal device is a relay device or a remote device, and the terminal device is a relay device or a remote device.

54. The terminal device according to any one of claims 47 to 53, wherein the first terminal device is in one of the following states: an idle state, a connected state, and an inactive state, and the second terminal device is in one of the following states: an idle state, a connected state, and an inactive state.

55. The terminal device according to any one of claims 47 to 54, wherein the processing module is further configured to determine whether the first area information changes; and
the transceiver module is further configured to when the processing module determines that the first area information changes, send the changed area information to the first terminal device.

56. The terminal device according to any one of claims 47 to 55, wherein the transceiver module is further configured to:
receive second area information sent by the first terminal device.

57. A network device, comprising:
a transceiver module configured to receive first area information, wherein the first area information is used by the network device to determine a paging area of the second terminal device according to the first area information; and
a processing module configured to page the second terminal device according to the first area information.

58. The network device according to claim 57, wherein the transceiver module is specifically configured to:
receive the first area information sent by the second device; or
receive the first area information sent by the first terminal device, wherein the first area information is sent by the second terminal device to the first terminal device.

59. The network device according to claim 58, wherein the network device is an access network device; and
the transceiver module is specifically configured to:
receive a radio resource control RRC message sent by the first terminal device, wherein the RRC message comprises the first area information; or
receive a physical layer message sent by the first terminal device, wherein the physical layer message comprises the first area information; or
receive a layer two protocol data unit PDU sent by the first terminal device, wherein the layer two PDU comprises the first area information.

60. The network device according to claim 59, wherein the transceiver module is further configured to:
send the first area information to a core network device.

61. The network device according to claim 59 or 60, wherein the access network device is a serving access network device of the first terminal device, or the access network device is an anchor access network device in a target area.

62. The network device according to claim 61, wherein the access network device is an anchor access network device in the target area; and
the transceiver module is further configured to:
send a first paging message to second target access network devices, and part or all of the second target access network devices are configured to send a second paging message to the second terminal device after receiving the first paging message, wherein the first paging message comprises the first area information.

63. The network device according to claim 58, wherein the network device is a core network device; and
the transceiver module is specifically configured to:
receive a non-access stratum NAS message sent by the first terminal device, wherein the NAS message comprises the first area information.

64. The network device according to claim 63, wherein the transceiver module is specifically configured to:
send a first paging message to second target access network devices, and part or all of the second target access network devices are configured to send a second paging message to the second terminal device after receiving the first paging message, wherein the first paging message comprises the first area information.

65. The network device according to any one of claims 57 to 64, wherein the first area information is used to indicate at least one of the following areas: a beam area where the second terminal device is located, a cell where the second terminal device is located, a base station where the second terminal device resides, a frequency point where the second terminal device resides, a paging area where the second terminal device is located, and a specific service area where the second terminal device is located.

66. The network device according to claim 65, wherein the first area information comprises at least one of the following information: identification information of the area, signal information related to the area, and resource information related to the area.
